# EUROPÄISCHE PATENTANMELDUNG

(11) **EP 2 284 223 A1**
(43) Veröffentlichungstag der Anmeldung: **16.02.2011**
(21) Anmeldenummer: 10168092.4
(22) Anmeldetag: 01.07.2010
(51) Int. Cl.: C08L 83/04, C09D 183/04, C08K 5/00, C08K 5/05, C08K 5/14, C09K 3/10

(54) **Härtbare Siliconzusammensetzungen**

(30) Priorität: 20.07.2009 DE 102009027847
(71) Anmelder: Wacker Chemie AG, 81737 München (DE)
(72) Erfinder: Köllnberger, Andreas, 84533, Marktl (DE)
(74) Vertreter: Mieskes, Klaus Theoderich

(57) **Zusammenfassung**

Die vorliegende Erfindung betrifft thermisch durch Hydrosilylierung vernetzbare Siliconzusammensetzungen, Verfahren zu deren Herstellung, sowie die Verwendung der vernetzbaren Zusammensetzungen.

## Beschreibung

Die vorliegende Erfindung betrifft thermisch durch Hydrosilylierung vernetzbare Siliconzusammensetzungen, Verfahren zu deren Herstellung, sowie die Verwendung der vernetzbaren Zusammensetzungen.

Um additionsvernetzende Siliconzusammensetzungen durch die Hydrosilylierungsreaktion zu vernetzen wird im Allgemeinen ein Katalysator eingesetzt, der typischerweise Platin oder ein Metall aus der Platingruppe enthält. Bei der katalytisch ablaufenden Reaktion werden aliphatisch ungesättigte Gruppen mit Si-gebundenem Wasserstoff umgesetzt, um Netzwerkstrukturen auszubilden.

Bei zweikomponentigen Systemen werden die reaktiven Bestandteile erst kurz vor der Verarbeitung vermischt. Die Mischungen enthalten einen aktiven Platinkatalysator, was zur Folge hat, dass die Vernetzungsreaktion schon bei Raumtemperatur abläuft und die Zeit bis zur Verarbeitung (Topfzeit) eng begrenzt ist. Daraus ergeben sich Nachteile wie ein zusätzlicher Mischungsschritt, ein erhöhter Reinigungsaufwand bei technischen Störungen und die Gefahr von Platinkontaminationen in Behältern.

Der Bedarf an einkomponentigen additionsvernetzenden Siliconkautschuksystemen, die idealerweise bei Raumtemperatur überhaupt nicht und bei erhöhter Temperatur möglichst schnell aushärten, ist seit langer Zeit gegeben.

Es gibt verschiedene Ansätze, das Problem der vorzeitigen Vernetzung bei Raumtemperatur zu lösen. Eine Möglichkeit besteht darin, den Katalysator in einem thermoplastischen Material zu verkapseln, welches bei erhöhter Temperatur schmilzt und dadurch den aktiven Katalysator freisetzt wie zum Beispiel in EP 0 459 464 A2 beschrieben. Die Herstellung des Katalysators ist jedoch relativ aufwändig.

Eine weitere Möglichkeit, eine vorzeitige Vernetzung einkomponentiger Systeme bei Raumtemperatur zu verhindern ist die Verwendung spezieller Platinkomplexe. Platinalkinylkomplexe werden in US 6,252,028 B und in US 6,359,098 B beschrieben. In US 4,256,616 A kommen Pt(0)-phosphin und -phosphitkomplexe in Kombination mit Zinnsalzen zum Einsatz und WO 03/098 890 A1 beschreibt Pt(0)-phosphitkomplexe, die als Strukturmerkmale sowohl Phosphitliganden als auch Divinyldisiloxanliganden enthalten.

Eine weitere, davon grundsätzlich verschiedene, Möglichkeit besteht in der Verwendung von Inhibitoren, die der Mischung als Additive zugesetzt werden, um eine Verlängerung der Topfzeit zu bewirken. Sie werden immer im Molaren Überschuss zur Katalysatorkomponente eingesetzt und hemmen dessen katalytische Aktivität. Mit zunehmender Inhibitormenge erfolgt jedoch neben einer Topfzeitverlängerung auch eine Abnahme der Reaktivität des Systems bei höheren Temperaturen und die Anspringtemperatur steigt an. Es gibt in der Literatur zahlreiche Beispiele für Inhibitoren aus verschiedenen Substanzklassen. In US 3,723,567 A werden aminofunktionelle Silane als Inhibitoren beansprucht. Alkyldiamine in Verbindung mit einem acetylenisch ungesättigten Alkohol werden in US 5,270,422 A zur Inhibierung verwendet. EP 0 761 759 A2 beansprucht eine Kombination von Inhibitoren, es wird ein Amin zusammen mit einem weiteren Inhibitor Acetylenalkohol verwendet. DE 19 757 221 A1 beschreibt ebenfalls die Stoffklasse der Phosphite in der Verwendung eines Inhibitors. Phosphine werden in US 4,329,275 A als Additiv zur Inhibierung beansprucht. Eine Kombination von Phosphiten in Verbindung mit organischen Peroxyden wird von EP 1 437 382 A1 beschrieben. Neben negativen Einflüssen auf die Vernetzungskinetik erweist sich der Einsatz von zum Teil flüchtigen Inhibitoren oder Inhibitoren, die flüchtige Bestandteile freisetzen, ebenfalls als ungünstig. Mischungen, die eine völlige Inhibierung bei Raumtemperatur und die völlige Nichtbeeinflussung der Reaktionsgeschwindigkeit bei Aushärtebedingungen durch einen entsprechenden Zusatzstoff aufweisen, sind bisher nicht bekannt.

Obwohl die beschriebenen Massen deutlich verbesserte Topfzeiten bei zum Teil hinreichend hohen Vernetzungsgeschwindigkeiten bei einkomponentig formulierten, additionsvernetzenden Massen liefern, besteht weiterhin Bedarf an leistungsfähigeren Platinkatalysatoren, die bei erhöhter Temperatur eine schnelle Vernetzung des Materials gewährleisten, aber die oben genannten Nachteile nicht zeigen.

Aufgabe der vorliegenden Erfindung war es, additionsvernetzende Massen zur Verfügung zu stellen, die die oben genannten Nachteile nicht zeigen und eine wesentlich verbesserte Tropfzeiten bei einer guten Vernetzungsgeschwindigkeit ermöglichen.

Im Folgenden wird von dem Begriff Organopolysiloxane sowohl polymere, oligomere wie auch dimere Siloxane umfasst.

Gegenstand dieser Anmeldung sind additionsvernetzende Siliconzusammensetzungen, ausgewählt aus der Gruppe enthaltend
- jeweils mindestens eine Verbindung (A), (B), (D), (K) und (L),
- jeweils mindestens eine Verbindung (C), (D), (K) und (L) und
- jeweils mindestens eine Verbindung (A), (B), (C), (D), (K) und (L),
wobei
(A) eine organische Verbindung oder eine Siliziumorganische Verbindung, enthaltend mindestens zwei Reste mit aliphatischen Kohlenstoff-Kohlenstoff-Mehrfachbindungen,
(B) ein Siliziumorganische Verbindung, enthaltend mindestens zwei Si-gebundenen Wasserstoffatome,
(C) eine Siliziumorganische Verbindung, enthaltend SiC-gebundene Reste mit aliphatischen Kohlenstoff-Kohlenstoff-Mehrfachbindungen und Si- gebundene Wasserstoffatome,
(D) ein Platinkatalysator,
(K) ein Hydroperoxid,
(L) ein acetylenischer Alkohol
bedeuten.

Es wurde überraschenderweise gefunden, dass sich aus der Verwendung einer Kombination eines oder mehrerer acetylenischer Alkohole (L) mit einem oder mehreren Hydroperoxiden (K) eine synergistische Wirkung in der Art ergibt, dass die Anspringtemperatur bei deutlich verbesserter Topfzeit nur moderat ansteigt. Diese Wirkung kann nicht alleine durch Verwendung einzelner Inibitoren erreicht werden.

Bei den erfindungsgemäßen Zusammensetzungen kann es sich um Einkomponenten-Siliconzusammensetzungen wie auch um Zweikomponenten-Siliconzusammensetzungen handeln. In letzterem Fall können die beiden Komponenten der erfindungsgemäßen Zusammensetzungen alle Bestandteile in beliebiger Kombination enthalten, im Allgemeinen mit der Maßgabe, dass eine Komponente nicht gleichzeitig Siloxane mit aliphatischer Mehrfachbindung,

Siloxane mit Si-gebundenem Wasserstoff und Katalysator, also im Wesentlichen nicht gleichzeitig die Bestandteile (A), (B) und (D) bzw. (C) und (D) enthält. Vorzugsweise handelt es sich bei den erfindungsgemäßen Zusammensetzungen jedoch um Einkomponenten-Zusammensetzungen.

Die in den erfindungsgemäßen Zusammensetzungen eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in Verhältnissen zwischen 0,1 bis 10, bevorzugt zwischen 0,2 und 5 aufweist. Auch sind Mischungen aus (A) und (B) und (C) mit den oben genannten Verhältnissen von aliphatisch ungesättigten Resten und Si-gebundenen Wasserstoffatomen möglich.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisoproppenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykoldiacrylat, Polyethylenglykol Dimethacrylat, Poly(propylenglykol)methacrylat.

Vorzugsweise enthalten die erfindungsgemäßen Siliconzusammensetzungen als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (II)

RₐR⁴_{b}SiO_{(4-a-b)/2} (II)

eingesetzt, wobei
**R** unabhängig voneinander, gleich oder verschieden, ein von aliphatischen Kohlenstoff-Kohlenstoff-Mehrfachbindungen freien, organischen oder anorganischen Rest,
**R⁴** unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,
**a** 0, 1, 2 oder 3 ist, und
**b** 0, 1 oder 2 ist
bedeuten,
mit der Maßgabe, dass die Summe a + b kleiner oder gleich 3 ist und mindestens 2 Reste R⁴ je Molekül vorliegen.

Bei Rest R kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (II) miteinander verbinden.

Weitere Beispiele für R sind die einwertigen Reste -F, -Cl, - Br, OR⁵, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (II) Si-gebundene Reste. Falls es sich bei Rest R um SiC-gebundene, substituierte Kohlenwasserstoffreste handelt, sind bevorzugte Substituenten Halogenatome, phosphorhaltige Reste, Cyanoreste, -OR⁵, -NR⁵-, -NR⁵₂, -NR⁵-C(O)-NR⁵₂, -C(O)-NR⁵₂, -C(O)R⁵, -C(O)OR⁵, -SO₂-Ph und -C₆F₅. Dabei bedeuten R⁵ unabhängig voneinander, gleich oder verschieden ein Wasserstoffatom oder einen einwertigen Kohlenwasserstoffrest mit 1 bis 20 Kohlenstoffatomen und Ph gleich Phenylrest.

Beispiele für Reste R sind Alkylreste, wie der Methyl-, Ethyl-, n-Propyl-, iso-Propyl-, n-Butyl-, iso-Bulyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R⁵)C(O)NR⁵₂, -(CH₂)ₙ-C(O)NR⁵₂, -(CH₂)ₙ-C(O)R⁵, -(CH₂)ₙ-C(O)OR⁵, - (CH₂)ₙ-C(O)NR⁵₂, -(CH₂)-C(O)-(CH₂)ₘC(O)CH₃, -(CH₂)-O-CO-R⁵, -(CH₂)-NR⁵-(CH₂)ₘ-NR⁵₂, -(CH₂)ₙ-O-(CH₂)ₘCH (OH) CH₂OH, - (CH₂)ₙ(OCH₂CH₂)ₘOR⁵, -(CH₂)ₙ-SO₂-Ph und -(CH₂)ₙ-O-C₆F₅, wobei R⁵ und Ph der oben dafür angegebene Bedeutung entspricht und n und m gleiche oder verschiedene ganze Zahlen zwischen 0 und 10 bedeuten.

Beispiele für R gleich zweiwertige, beidseitig gemäß Formel (II) Si-gebundene Reste sind solche, die sich von den voranstehend für Rest R genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, -CH(CH₃)-CH₂-, -C₆H₄-, - CH(Ph)-CH₂-, -C(CF₃)₂-, -(CH₂)ₙ-C₆H₄-(CH₂)ₙ-, - (CH₂)ₙ-C₆H₄-C₆H₄-(CH₂)ₙ-, -(CH₂O)ₘ, (CH₂CH₂O)ₘ, -(CH₂)ₙ-Oₓ-C₅H₄-SO₂-C₆H₄-Oₓ-(CH₂)ₙ-, wobei x 0 oder 1 ist, und Ph, m und n die voranstehend genannte Bedeutung haben.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R⁴ kann es sich um beliebige, einer Anlagerungsreaktion (Hydrosilylierung) mit einer SiHfunktionellen Verbindung zugängliche Gruppen handeln. Falls es sich bei Rest R⁴ um SiC-gebundene, substituierte Kohlenwasserstoffreste handelt, sind als Substituenten Halogenatome, Cyanoreste und -OR⁵ bevorzugt, wobei R⁵ die obengenannte Bedeutung hat.

Bevorzugt handelt es sich bei Rest R⁴ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden. Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R⁴R₂SiO_{2/2}, R4RSiO_{1/2} und R₂SiO_{2/2} zusammengesetzt, wobei R und R⁴ die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R⁴SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa•s, besonders bevorzugt von 0,1 bis 100 000 Pa•s, jeweils bei 25°C.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (III)

R_{c}H_{d}SiO_{(4-c-d)/2} (III)

eingesetzt, wobei
**R** die oben angegebene Bedeutung hat,
**c** 0,1 2 oder 3 ist und
**d** 0, 1 oder 2 ist,
mit der Maßgabe, dass die Summe von c + d kleiner oder gleich 3 ist und mindestens zwei Si gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung hat. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind, wobei R die vorstehend angegebene Bedeutung hat.

Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiHfunktioneller Verbindungen wie Tetrakis(dimethylsiloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 10 000 mPa•s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Siliconzusammensetzungen enthalten, dass das Molverhältnis von SiH-Gruppen zu aliphatisch ungesättigten Gruppen aus (A) bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Siliconzusammensetzungen Organopolysiloxane (C), die gleichzeitig aliphatische Kohlenstoff-Kohlenstoff-Mehrfachbindungen und Si-gebundene Wasserstoffatome aufweisen, enthalten. Auch können die erfindungsgemäßen Siliconzusammensetzungen alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

R_{f}Si0_{4-f/2} (IV)

R_{g}R⁴SiO_{3-g/2} (V)

RₕHSiO_{3-h/2} (VI)

wobei
**R** und **R⁴** die oben dafür angegebene Bedeutung haben
**f** 0, 1, 2 oder 3 ist,
**g** 0, 1 oder 2 ist und
**h** 0, 1 oder 2 ist,
mit der Maßgabe, dass je Molekül mindestens 2 Reste R⁴ und mindestens 2 Si-gebundene Wasserstoffatome vorliegen.

Beispiele für Organopolysiloxane (C) sind solche aus SiO_{4/2}, R₃SiO_{1/2}-, R₂R⁴SiO_{1/2}- und R₂HSiO_{1/2}- Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R⁴SiO_{1/2}-, R₂SiO- und RHSiO-Einheiten mit R und R⁴ gleich der obengenannten Bedeutung.

Die Organopolysiloxane (C) besitzen vorzugsweise eine durchschnittliche Viskosität von 0,01 bis 500 000 Pa•s, besonders bevorzugt 0,1 bis 100 000 Pa•s jeweils bei 25°C. Organopolysiloxane (C) sind nach in der Chemie gängigen Methoden herstellbar.

Als die Anlagerung von Si-gebundenem Wasserstoff an aliphatische Mehrfachbindung fördernde Katalysatoren (D) können auch bei dem erfindungsgemäßen Verfahren die gleichen Katalysatoren (D) eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren (D) sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆*6H₂O, Na₂PtCl₄*4H₂O, Platin-Olefin-Komplexe, Platin-Phosphit-Komplexe Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinyl-siloxankomplexe, wie Platin-1,3-Divinyl-1,1,3,3-tetra-methyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (D) wird bei dem erfindungsgemäßen Verfahren bevorzugt in Mengen von 0,5 bis 100 Gew.-ppm (Gewichtsteilen je Million Gewichtsteilen), besonders bevorzugt in Mengen von 5 bis 50 Gew.-ppm, jeweils berechnet als elementares Platin und bezogen auf das Gesamtgewicht der Siliconzusammensetzung eingesetzt.

Als Komponente (K) können alle im Stand der Technik bekannten Hydroperoxide eingesetzt werden, wie beispielsweise Cumolhydroperoxid, ter-Butylhydroperoxid, Pinanhydroperoxid, 5-Phenyl-4-pentenyl hydroperoxid, 2-Butanonperoxid (1-[(1-hydroperoxy-1-methylpropyl)peroxy]-1-methylpropyl hydroperoxide ), etc. Bevorzugt sind Verbindungen, die sowohl mindestens eine Hydroperoxy- und mindestens eine Peroxygruppe enthalten, wie z.B. 2-Butanonperoxid.

Als Komponente (L), können alle im Stand der Technik bekannten acetylenische Alkohole verwendet werden. Geeignete Beispiel sind 1-Ethinyl-1-cyclohexanol, 2-Methyl-3-butin-2-ol und 3,5-Dimethyl-1-hexin-3-ol oder 3-Methyl-1-dodecin-3-ol. Bevorzugt wird als Komponente (L) 1-Ethinylcyclohexanol eingesetzt.

Neben den oben genannten Komponenten (A), (B), (C), (D), (K) und (L) können noch weitere Komponenten (E) oder (F) in den erfindungsgemäßen Siliconzusammensetzungen enthalten sein.

Komponenten (E) wie beispielsweise Inhibitoren und Stabilisatoren, die von (K) und (L) verschieden sind, dienen der gezielten Einstellung der Verarbeitungszeit, Anspringtemperatur und Vernetzungsgeschwindigkeit der erfindungsgemäßen Siliconzusammensetzungen. Diese Inhibitoren und Stabilisatoren sind auf dem Gebiet der additionsvernetzenden Zusammensetzungen sehr gut bekannt. Beispiele gebräuchlicher Inhibitoren sind Polymethylvinylcyclosiloxane wie 1,3,5,7-Tetravinyltetramethyltetracyclosiloxan niedermolekulare Siliconöle mit Methylvinyl-SiO_{1/2}-Gruppen und/oder R₂vinylSiO_{1/2}-Endgruppen wie Divinyltetramethydisiloxan Tetravinyldimethyldisiloxan, Trialkylcyanurate, Alkylmaleate, wie Diallylmaleate, Dimethylmaleat und Diethylmaleat, Alkylfumarate, wie Diallylfumarat und Diethylfurnarat, organische Peroxide, organische Sulfoxide organische Amine. Diamine und Amide, Phosphane und Phosphite, Nitrile, Triazole, Diaziridine und Oxime. Die Wirkung dieser Inhibitorzusätze (E) hängt von ihrer chemischen Struktur ab, so dass die Konzentration individuell bestimmt werden muss. Inhibitoren und Inhibitormischungen werden vorzugsweise in einem Mengenanteil von 0,00001 % bis 5 % bezogen auf das Gesamtgewicht der Mischung zugesetzt, bevorzugt 0,00005 bis 2 % und besonders bevorzugt 0,0001 bis 1 %.

Komponenten (F) sind alle weiteren Zusatzstoffe, die auch bisher zur Herstellung von additionsvernetzbaren Zusammensetzungen eingesetzt wurden. Der Gehalt der erfindungsgemäßen vernetzbaren Zusammensetzung an aktiv verstärkendem Füllstoff (F) liegt im Bereich von 0 bis 70 Gew.-%, vorzugsweise bei 0 bis 50 Gew.-%.

Die erfindungsgemäße Siliconzusammensetzung kann wahlweise die Komponente (F) als weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A), (B) und (C) verschieden sind, verstärkende und nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Metallhydroxide, Fasern, wie Glasfasern, Kunststofffasern, Kunststoffpulver, Metallstäube, Farbstoffe, Pigmente usw.

Beispiele für verstärkende Füllstoffe, die als Komponente (F) in den erfindungsgemäßen Siliconzusammensetzungen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Die erfindungsgemäßen Siliconzusammensetzungen können, falls erforderlich, in Flüssigkeiten gelöst, dispergiert suspendiert oder emulgiert werden. Die erfindungsgemäßen Zusammensetzungen können - insbesondere je nach Viskosität der Bestandteile sowie Füllstoffgehalt - niedrigviskos und gießbar sein, eine pastöse Konsistenz aufweisen pulverförmig sein oder auch geschmeidige, hochviskose Massen darstellen, wie dies bekanntermaßen bei den in Fachkreisen häufig als RTV-1, RTV-2, LSR und HTV bezeichneten Zusammensetzungen der Fall sein kann. Insbesondere können die erfindungsgemäßen Zusammensetzungen, falls sie hochviskos sind, in Form eines Granulates zubereitet werden. Hierbei kann das einzelne Granulatteilchen alle Komponenten enthalten, oder die erfindungsgemäß eingesetzten Komponenten sind getrennt in verschiedenen Granulatteilchen eingearbeitet. Hinsichtlich der elastomeren Eigenschaften der vernetzten erfindungsgemäßen Siliconzusammensetzungen wird gleichfalls das gesamte Spektrum umfasst, beginnend bei extrem weichen Silicongelen, über gummiartige Materialien bis hin zu hochvernetzten Siliconen mit glasartigem Verhalten.

Die Herstellung der erfindungsgemäßen Siliconzusammensetzungen kann nach bekannten Verfahren erfolgen, wie beispielsweise durch gleichmäßige Vermischung der einzelnen Komponenten. Die Reihenfolge dabei ist beliebig, bevorzugt ist jedoch die gleichmäßige Vermischung des Platinkatalysators (D) mit einer Mischung aus (A), (B) gegebenenfalls (E) und (F). Der erfindungsgemäß eingesetzte Platinkatalysator (D) und gegebenenfalls (C) kann dabei als Festsubstanz oder als Lösung - in einem geeigneten Lösungsmittel gelöst - oder als sogenannter Batch - gleichmäßig mit einer geringen Menge (A) oder (A) mit (E) vermischt - eingearbeitet werden.

Bei den erfindungsgemäß eingesetzten Komponenten (A),(B), (C), (D), (E), (F), (K) und (L) kann es sich jeweils um eine einzelne Art einer solchen Komponente, wie auch um ein Gemisch aus mindestens zwei verschiedenen Arten einer solchen Komponente handeln.

Die erfindungsgemäßen durch Anlagern von Si-gebundenem Wasserstoff an aliphatische Mehrfachbindung vernetzbaren Siliconzusammensetzungen können unter den gleichen Bedingungen vernetzt werden, wie die bisher bekannten durch Hydrosilylierungsreaktion vernetzbaren Zusammensetzungen.

Vorzugsweise handelt es sich dabei um Temperaturen von 100 bis 220°C, besonders bevorzugt von 130 bis 190°C, und einem Druck von 900 bis 1100 hPa. Es können aber auch höhere oder niedrigere Temperaturen und Drücke angewendet werden.

Ein weiterer Gegenstand der vorliegenden Erfindung sind Formkörper hergestellt durch Vernetzung der erfindungsgemäßen Zusammensetzungen.

Die erfindungsgemäßen Siliconzusammensetzungen sowie die erfindungsgemäß daraus hergestellten Vernetzungsprodukte können für alle Zwecke eingesetzt werden, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, beispielsweise im Spritzgussverfahren, Vakuumextrusionsverfahren, Extrusionsverfahren Formgießen und Formpressen, und Abformungen, die Verwendung als Dicht- Einbett- und Vergussmassen usw.

Die erfindungsgemäßen vernetzbaren Siliconzusammensetzungen haben den Vorteil dass sie in einem einfachen Verfahren unter Verwendung leicht zugänglicher Ausgangsstoffe und damit wirtschaftlich hergestellt werden können. Die erfindungsgemäßen vernetzbaren Zusammensetzungen haben den weiteren Vorteil, dass sie als einkomponentige Formulierung bei 25°C und Umgebungsdruck eine sehr gute Lagerstabilität aufweisen und erst bei erhöhter Temperatur rasch vernetzen. Dabei zeigen die beiden Komponenten (K) und (L) überraschenderweise einen synergistischen Effekt bezüglich der Lagerstabilität. Die erfindungsgemäßen Siliconzusammensetzungen haben den Vorteil, dass diese bei zweikomponentiger Formulierung nach Vermischen der beiden Komponenten eine vernetzungsfähige Siliconmasse ergeben, deren Verarbeitbarkeit über einen langen Zeitraum hinweg bei 25°C und Umgebungsdruck bestehen bleibt, also extrem lange Topfzeit zeigt, und erst bei erhöhter Temperatur rasch vernetzt.

Die erfindungsgemäßen Zusammensetzungen haben des Weiteren den Vorteil, dass die daraus erhaltenen vernetzten Siliconkautschuke eine ausgezeichnete Durchsichtigkeit aufweisen.

Die erfindungsgemäßen Zusammensetzungen haben ferner den Vorteil, dass die Hydrosilylierungsreaktion sich nicht mit der Reaktionsdauer verlangsamt.

### Beispiele

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Für die Ausführung der Beispiele kann jede mögliche Mischung aus den zuvor beschriebenen Komponenten (A), (B), (C) und (D) inkl. Füllstoffe und Additive als Grundmischung verwendet werden, da die Grundmischung keinen Einfluss auf die zu bestimmenden Werte "Anspringtemperatur" und "Topfzeit" hat. Die Anspringtemperatur gibt den Beginn der Vernetzung bei 4 % des Endwerts wieder, wobei die Messung selbst mit einer Temperaturrampe von 80°C bis 200°C und einer Steigung von 10 K/min ausgeführt wird. Am Endpunkt der Topfzeit ist das Material nicht mehr verarbeitbar, eine Replastifizierung ist nicht mehr möglich.

In der Tabelle 1 wird die synergistische Wirkung der Kombination eines oder mehrerer acetylenischer Alkohole (L) mit einem oder mehreren Hydroperoxiden (K) aufgezeigt. Additive, Si-H-Vernetzer und Katalysatoren können in jeder beliebigen Reihenfolge eingemischt werden, wobei die Zugabe des Katalysators bevorzugt nach der Zugabe der Additive erfolgt. Aus den oben genannten Bestandteilen Vinylpolymer, Si-H-Vernetzer, Füllstoffe wird eine vernetzbare Grundmischung hergestellt, wobei die Zusammensetzung keinen oder nur einen geringen Einfluss auf die relevanten Parameter Topfzeit und Anspringtemperatur hat. Für die Herstellung dieser Grundmischung sind alle oben genannten Mischungsverhältnisse zulässig. In den vorliegenden Beispielen wird der sogenannte Karstedt-Katalysator (Platin-1,3-Divinyl-1,1,3,3-tetra-methyldisiloxankomplexe) verwendet, es können aber auch alle anderen bekannten Katalysatoren der Platingruppe verwendet werden. Die Mengenangaben der Hydroperoxide beziehen sich jeweils auf die Summe der verwendeten Lösungen bzw. Mischungen und es werden folgende Abkürzungen verwendet:
2-Butanonperoxid: 50-60 %ig in Diacetonalkohol (BPO)
Tert-Butylhydroperoxid: 5-6 M in Decan (tBuHPO)
Cumolhydroperoxid: techn. 80 %ig (CHPO)
Bsp.Nr. (Beispiel Nummer)
Kat. (Katalysator)
RT (Raumtemperatur)
n.a. (nicht ausgeführt)

**Tabelle 1**

| **Bsp. Nr.** | **Kat in ppm** | **Inhibitor in ppm** | **Hydroperoxid in %** | **Anspringtemperatur in °C** | **Topfzeit *in Tagen*** | |
|---|---|---|---|---|---|---|
| | | | | | **bei 50°C** | **bei RT** |
| 1* | 5 | 500 (ECH) | 0 | 108 | 3 | 41 |
| 2 | 5 | 500 (ECH) | 0,01 (BPO) | 119 | 3 | 75 |
| 3 | 5 | 500 (ECH) | 0,05 (BPO) | 140 | 11 | 250 |
| 4 | 5 | 500 (ECH) | 0,1 (BPO) | 153 | 25 | >360 |
| 5* | 5 | 0 (ECH) | 0,05 (BPO) | 86 | 0,3 | 5 |
| 6* | 5 | 0 (ECH) | 0,1 (BPO) | 92 | 2 | 47 |
| 7 | 5 | 50 (ECH) | 0,2 (BPO) | 107 | 2 | 80 |
| 8 | 5 | 50 (ECH) | 0,3 (BPO) | 115 | 4 | 101 |
| 9 | 5 | 50 (ECH) | 0,4 (BPO) | 136 | 10 | 164 |
| 10* | 0 | 0 | 1 (BPO) | nicht vernetzt | n.a. | n.a. |
| 11 | 5 | 100 (ECH) | 0,2 (BPO) | 114 | 2 | 73 |
| 12 | 5 | 150 (ECH) | 0,2 (BPO) | 126 | 4 | 101 |
| 13 | 5 | 200 (ECH) | 0,2 (BPO) | 133 | 7 | 136 |
| 14 | 5 | 500 (ECH) | 0,01 (tBuHPO) | 122 | 4 | 70 |
| 15 | 5 | 500 (ECH) | 0,05 (tBuHPO) | 145 | 8 | 200 |
| 16 | 5 | 500 (ECH) | 0,1 (tBuHPO) | 150 | 15 | >360 |
| 17* | 0 | 0 | 1 (tBuHPO) | nicht vernetzt | n.a. | n.a. |
| 18 | 5 | 500 (ECH) | 0,01 (CHPO) | 123 | 3 | 65 |
| 19 | 5 | 500 (ECH) | 0,05 (CHPO) | 138 | 9 | 230 |
| 20 | 5 | 500 (ECH) | 0,1 (CHPO) | 144 | 18 | 300 |
| 21* | 0 | 0 | 1 (CHPO) | nicht vernetzt | n.a. | n.a. |
| 22* | 5 | 1000 (ECH) | - | 135 | 4 | 120 |
| 23* | 5 | 2000 (ECH) | - | 150 | 5 | 250 |

| | | | | | | |
|---|---|---|---|---|---|---|
| * nicht erfindungsgemäß | | | | | | |

In den Beispielen der Tabelle 1 wird die Grundmischung mit den Inhibitoren (acetylenischer Alkohol und Hydroperoxid) vermischt, bevor der Platinkatalysator zugegeben wird.

Die Tabelle 1 gibt die Zusammensetzung und Ergebnisse wieder. In den Beispielen 10, 17 und 21 wird deutlich, dass das zugesetzte Hydroperoxid als Inhibitor für die platinkatalysierte Hydrosilylierung dient und dass folglich peroxidinduzierte Vernetzung stattfindet, da Massen ohne Platinkatalysator nicht vernetzen. Die Beispiele 5 und 6 zeigen, dass bei der alleinigen Verwendung von Hydroperoxid als Inhibitor die Hydrosilylierung ohne den Zusatz von acetylenischem Alkohol nicht ausreichend inhibiert wird. Fügt man den Mischungen jedoch eine Kombination aus acetylenischem Alkohol und Hydroperoxid hinzu (Beispiele 2, 3, 4, 14, 15, 16, 18, 19, 20), kann vor allem die Raumtemperaturtopfzeit überproportional verlängert werden. Überraschenderweise ist durch die Kombination der beiden Inhibitoren ein synergistischer Effekt zu beobachten. Die Anspringtemperatur dieser Mischungen steigt im Vergleich zur Topfzeit (besonders der Raumtemperaturtopfzeit) nur mäßig. Ein weiterer Vorteil, der sich aus der Kombination der zwei Verbindungsklassen ergibt ist, dass in Summe deutlich weniger Menge an Inhibitoren zugemischt werden muss, um die gleiche Topfzeit zu erhalten. Gerade bei der Verwendung der Materialien für isolierende Materialien stellt dies einen deutlichen Vorteil dar (es entstehen weniger Spalt- und Nebenprodukte).

## Patentansprüche

1. Additionsvernetzende Siliconzusammensetzungen, ausgewählt aus der Gruppe enthaltend
- jeweils mindestens eine Verbindung (A), (B), (D), (K) und (L),
- jeweils mindestens eine Verbindung (C), (D), (K) und (L) und
- jeweils mindestens eine Verbindung (A), (B), (C), (D); (K) und (L),
wobei
(A) eine organische Verbindung oder eine Siliziumorganische Verbindung, enthaltend mindestens zwei Reste mit aliphatischen Kohlenstoff-Kohlenstoff-Mehrfachbindungen,
(B) ein Siliziumorganische Verbindung, enthaltend mindestens zwei Si-gebundenen Wasserstoffatome,
(C) eine Siliziumorganische Verbindung, enthaltend SiC-gebundene Reste mit aliphatischen Kohlenstoff-Kohlenstoff-Mehrfachbindungen und Si- gebundene Wasserstoffatome,
(D) ein Platinkatalysator,
(K) ein Hydroperoxid,
(L) ein acetylenischer Alkohol
bedeuten.

2. Additionsvernetzende Siliconzusammensetzungen gemäß Anspruch 1, **dadurch gekennzeichnet, dass** sie als weitere Komponente (E) Inhibitoren oder Stabilisatoren oder eine Mischung mindestens zweier Komponenten (E), die von (K) und (L) verschieden sind, in einem Mengenanteil von 0,00001 % bis 5 % bezogen auf das Gesamtgewicht der Zusammensetzung enthalten.

3. Additionsvernetzende Siliconzusammensetzungen gemäß einem der Ansprüche 1 oder 2, **dadurch gekennzeichnet, dass** sie als weitere Komponente (F) enthalten, ausgewählt aus der Gruppe enthaltend verstärkende und nicht verstärkende Füllstoffe, Dispergierhilfsmittel, Lösungsmittel, Haftvermittler, Pigmente, Farbstoffe, Weichmacher, organische Polymere, Hitzestabilisatoren, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften.

4. Verfahren zur Herstellung einer additionsvernetzenden Siliconzusammensetzungen gemäß Anspruch 1, **dadurch gekennzeichnet, dass**
- jeweils mindestens eine Verbindung (A), (B), (D), (K) und (L),
- jeweils mindestens eine Verbindung (C), (D), (K) und (L) oder,
- jeweils mindestens eine Verbindung (A), (B), (C), (D), (K) und (L)
miteinander vermischt werden.

5. Verfahren gemäß Anspruch 4, **dadurch gekennzeichnet, dass** jeweils zusätzlich noch weitere Verbindungen aus der Gruppe der Verbindungen enthaltend (E), (F) eingemischt werden.

6. Verwendung der Zusammensetzung gemäß einem der Ansprüche 1 bis 3 zur Herstellung von Formkörpern, für Siliconbeschichtung, für Imprägnierung, zur Herstellung von Abformungen, für Dicht- Einbett- und Vergussanwendungen.
